# EUROPEAN PATENT SPECIFICATION

(11) **EP 2 566 014 B1**
(45) Date of publication and mention of the grant of the patent: **05.08.2020**
(21) Application number: 11774884.8
(22) Date of filing: 20.04.2011
(51) Int. Cl.: H02K 5/14, B60J 7/057, H02K 7/116

(54) **MOTOR WITH DECELERATOR AND SUNROOF DRIVE DEVICE**
MOTOR MIT EINEM ENTSCHLEUNIGER UND SONNENDACH-ANTRIEBSVORRICHTUNG
MOTEUR AVEC DÉCÉLÉRATEUR ET DISPOSITIF D'ENTRAÎNEMENT DE TOIT OUVRANT

(30) Priority: 27.04.2010 JP 2010102140
(43) Date of publication of application: 06.03.2013
(73) Proprietor: Mitsuba Corporation, Kiryu-shi Gunma 376-8555 (JP)
(72) Inventor: YOSHIDA Satoru, Kiryu-shi Gunma 376-8555 (JP); MIURA Takahisa, Kiryu-shi Gunma 376-8555 (JP); NEGISHI Toshihiro, Kiryu-shi Gunma 376-8555 (JP); TSUTSUI Ryo, Kiryu-shi Gunma 376-8555 (JP); KIMURA Tetsuya, Kiryu-shi Gunma 376-8555 (JP)
(74) Representative: Eisenführ Speiser
(86) International application number: PCT/JP2011/059702
(87) International publication number: WO 2011/136101

(56) References cited:
- EP-A1- 1 560 314
- WO-A1-2009/121428
- JP-A- 2006 211 857
- JP-A- 2007 288 890
- JP-A- 2009 011 078
- US-A1- 2004 012 296
- US-A1- 2009 121 578
- US-A1- 2009 243 425

## Description

### [Technical Field]

The present invention relates to a motor with decelerator, and a sunroof drive device using the same.

This application claims priority to and the benefit of Japanese Patent Application No. 2010-102140 filed on April 27, 2010.

### [Background Art]

In the related art, a motor with decelerator in which an electric motor and a gear casing configured to accommodate a deceleration connected to a rotary shaft of the electric motor are integrated with each other is well known. Such an electric motor is, for example, a brushed motor including an armature and a pair of brushes configured to slidably contact a commutator of the armature.

The pair of brushes are attached to the gear casing and accommodated in brush holders thereof. The brush holders are formed of resin, and two brush holders are installed to correspond to the brushes. The pair of brush holders are configured to be detachable with respect to the gear casing (for example, see JP 2006-211857).

US 2009/0121578 A1 discloses an assembly of a brush system, which is simplified by one mechanical contact element for providing an external interface. In the brush system which is separate from and can be handled independently of the printed circuit board essentially consists of a base and of brushes provided in corresponding brush chambers. The base of the brush system has a U-shaped recess for positioning at the commutator.

US 2009/0243425 A1 discloses a brush holder having brush holding portions and coil holding portions. Each brush holding portion holds a brush such that the brush is slidable on a commutator attached to a rotary shaft. Each coil holding portion holds a choke coil electrically connected to one of the coils. The brush holder includes a holder base member and brush holding members that are assembled to the holder base member so as to form the brush holding portions. Each brush holding member includes a coil supporting portion, which forms the coil holding portion between the corresponding brush holding member and the holder base member.

WO 2009/121428 A1 discloses a suppressor for a commutating system of a DC motor, the commutator discs thereof working together with a brush support arrangement having at least two brushes that can be connected to a DC voltage supply by means of connecting cables, wherein the connecting cables are connected to each other and/or to ground by means of at least one capacitance. The commutating system is thereby partially shielded by an electrically conductive part having pass-through openings for connecting cables of the brushes capacitively connected to the housing of the motor in a region not shielded by the housing of the motor and/or by a flange-mounted gearbox, whereby the electromagnetic compatibility of the drive arrangement is significantly improved with a little additional effort.

### [Summary of Invention]

### [Problems to be Solved by Invention]

However, in the above-mentioned related art, since only small parts such as brush holders are mounted on the gear casing, the brush holders cannot be easily assembled, and assembly precision of the brush holders cannot be easily increased.

Here, in consideration of the above-mentioned problems, the present invention provides a motor with decelerator, and a sunroof drive device capable of improving assembly workability of a brush holder and increasing assembly precision of the brush holder.

### [Means for Solving the Problems]

In order to solve the problems, a motor with decelerator according to the invention as defined in the independent claim 1 is provided. Further embodiments of the invention are defined in the dependent claims 2 - 5.

As described above, since the holder stays are integrated with the brush holders, like the related art, in comparison with the case in which only the brush holder is assembled with respect to the gear casing, assembly workability of the brush holder can be improved.

That is, parts configured to assemble the brush can be increased in size without increasing the size of the entire motor. In addition, the holder stays are separately configured to correspond to the brush holders.

For this reason, assembly workability of the brush holder can be improved.

In addition, as the parts are increased in size, dimension management of the parts becomes easy, and assembly precision of the brush holder can be increased.

Further, a surge voltage is generated by self induction when the brush steps over an adjacent segment of the commutator in a power-on state, and the electromagnetic noise is radiated from an area at which the brush and the commutator are in sliding contact with each other by the surge voltage. For this reason, for example, when the motor with decelerator is mounted on a vehicle, the influence of the electromagnetic noise may be applied to the other electrical components or the like.

However, as the electromagnetic shield is installed at the outside of the holder stay, the influence of the electromagnetic noise can be suppressed.

According to a second aspect, a labyrinth section is formed between a circumferential edge of the accommodating concave section and an area of the holder stay corresponding to the circumferential edge.

According to the above-mentioned configuration, even when processing precision of the accommodating concave section, the holder stay, and the brush holder is relaxed, infiltration of dust into a gap between the accommodating concave section and the holder stay and a gap between the accommodating concave section and the brush holder can be prevented. For this reason, manufacturing cost can be reduced, and the influence dust infiltration can be suppressed.

In the motor with decelerator, in a state in which the electromagnetic shields are attached to the holder stays and th holder stay, the brush holder, and the electromagnetic shield are integrated, the holder stay, the brush holder, and the electromagnetic shield may be attached to the gear casing.

According to the above-mentioned configuration, the brush, the brush holder, the holder stay, and the electromagnetic shield can be integrated and assembled to the gear casing. For this reason, assembly workability can be further improved.

In the motor with decelerator, the electromagnetic shield is divided to correspond to the holder stays, and the electromagnetic shields may be attached to the gear casing by a fastening unit configured to attach the electric motor and the gear casing.

According to the above-mentioned configuration, when the electric motor and the gear casing are attached, the electromagnetic shield can be simultaneously attached to the gear casing, and an assembly task becomes easy. Further, since the electromagnetic shield and a yoke housing of the electric motor are electrically connected via a fastening unit, the electromagnetic noise generated from the electric motor can be suppressed.

A sunroof drive device according to a third aspect is a sunroof drive device in which the motor with decelerator is installed on a roof of a vehicle, and a roof panel installed on the roof is driven using the motor with decelerator. In this state, the motor with decelerator is disposed in a state in which the electromagnetic shield is directed toward the roof.

According to the above-mentioned configuration, the influence of the electromagnetic noise on an antenna or the like installed on the roof of the vehicle can be prevented. For this reason, the sunroof drive device having high reliability can be provided.

### [Effects of the Invention]

According to the present invention, since the brush holders are integrated with the holder stays, assembly workability of the brush holders can be improved in comparison with the case in which only the brush holders are assembled with respect to the gear casing.

That is, components assembled to the gear casing can be increased in size without an increase in size of the motor as a whole. In addition to this, the holder stays are separately configured to correspond to the brush holders.

For this reason, assembly workability of the brush holders can be improved.

In addition, as the components are increased in size, dimension management of the components becomes easy, and assembly precision of the brush holders can be increased.

### [Brief Description of the Drawings]

FIG. 1 is a schematic configuration view of a sunroof drive device according to a first embodiment of the present invention.
FIG. 2 is a perspective view of a motor with decelerator according to the first embodiment of the present invention.
FIG. 3 is an exploded perspective view of the motor with decelerator according to the first embodiment of the present invention.
FIG. 4 is an exploded perspective view of a brush unit of the first embodiment of the present invention.
FIG. 5 is a longitudinal cross-sectional view of a first unit constituting the brush unit of the first embodiment of the present invention.
FIG. 6 is a perspective view of a holder stay according to the first embodiment of the present invention.
FIG. 7A is a graph of variation in electromagnetic noise in the first embodiment of the present invention, showing the case in which a choke coil is wound left-handed.
FIG. 7B is a graph of variation in electromagnetic noise in the first embodiment of the present invention, showing the case in which a choke coil is wound in a direction opposite to that of FIG. 7A.
FIG. 8 is a perspective view of a motor with decelerator according to a second embodiment of the present invention.
FIG. 9 is an exploded perspective view of a brush unit of the second embodiment of the present invention.
FIG. 10 is a side view of a first unit of the second embodiment of the present invention.
FIG. 11 is a front view of the first unit of the second embodiment of the present invention.

### [Modes for Carrying out the Invention]

### (First Embodiment)

### (Sunroof Drive Device)

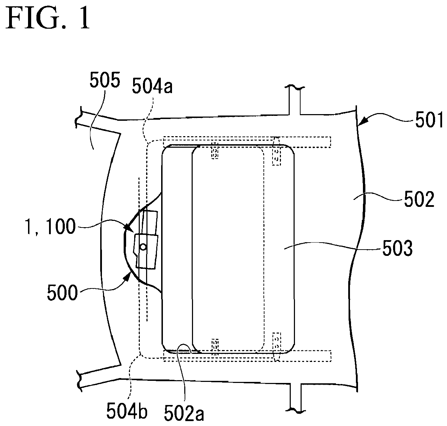

Next, a first embodiment of the present invention will be described with reference to FIGS. 1 to 7.

FIG. 1 is a schematic view of a sunroof drive device 500.

As shown in FIG. 1, the sunroof drive device 500 is attached to a roof 502 of a vehicle 501, and drives a roof panel 503 installed on the roof 502. The sunroof drive device 500 includes a motor with decelerator 1. An opening 502a is formed in the roof 502, and the roof panel 503 is formed to open and close the opening 502a. One ends of cables 504a and 504b are connected to the roof panel 503. The other ends of the cables 504a and 504b are connected to the motor with decelerator 1, and the roof panel 503 opens and closes the opening 502a when the motor with decelerator 1 is driven. The motor with decelerator 1 is disposed between the opening 502a of the roof 502 and a front glass 505.

### (Motor With Decelerator)

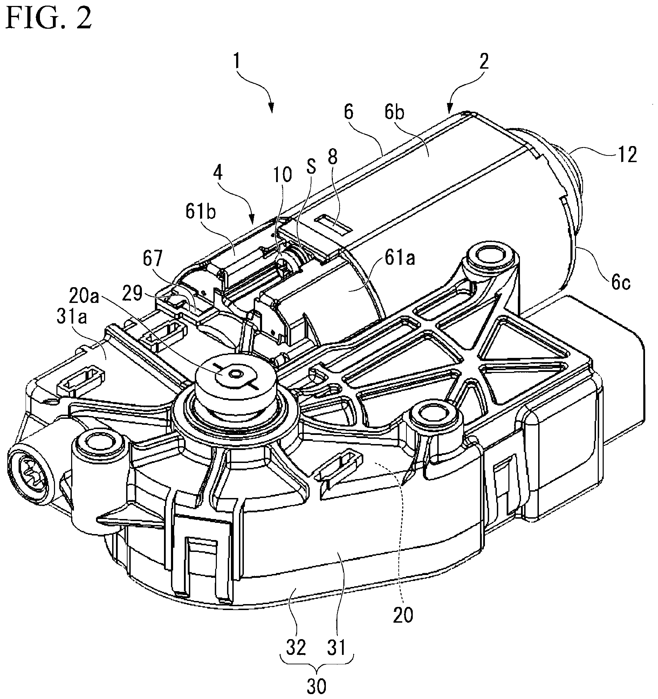

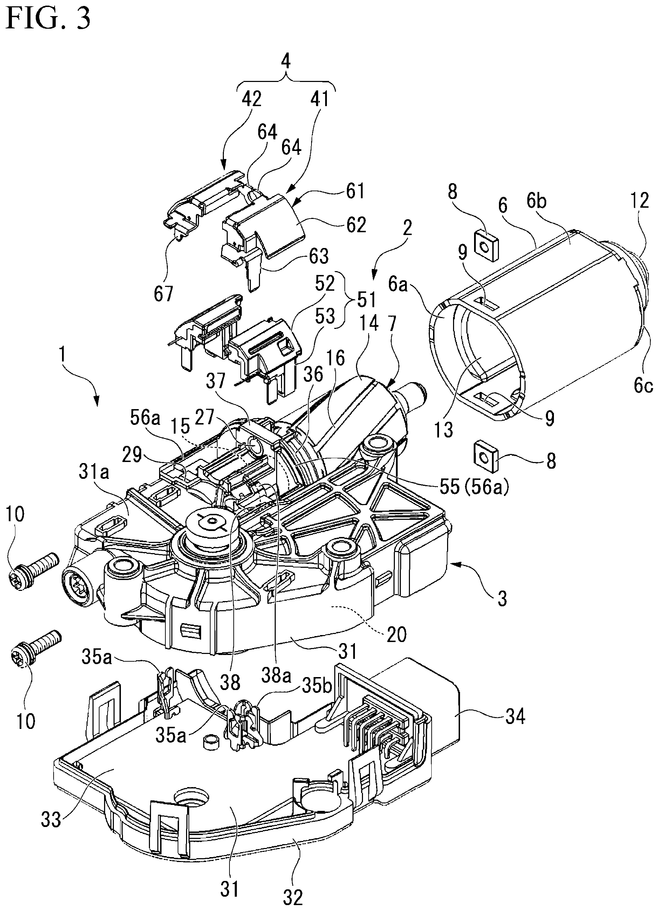

FIG. 2 is a perspective view of the motor with decelerator 1. FIG. 3 is an exploded perspective view of the motor with decelerator 1.

As shown in FIGS. 2 and 3, the motor with decelerator 1 includes an electric motor 2 and a gear casing 3 in which a deceleration mechanism 20 is accommodated and a brush unit 4 is attached to the gear casing 3.

The deceleration mechanism 20 is constituted by a worm shaft configured to transmit power of the electric motor 2, a worm wheel meshed with the worm shaft (neither of which is shown), and an output shaft 20a connected to the worm wheel. The other ends of the cables 504a and 504b are connected to the output shaft 20a.

The gear casing 3 configured to accommodate the deceleration mechanism 20 is formed of resin, can be divided into an upper case 31 and a lower case 32, and is configured such that the deceleration mechanism 20 can be accommodated in the upper case 31. The motor with decelerator 1 is attached to a vehicle interior side of the roof 502 in a state in which the upper case 31 is directed to the roof 502 side and the output shaft 20a is directed to the roof 502 side.

A circuit board 33 configured to drive the electric motor 2 is accommodated in the lower case 32. A female terminal 35a connectable to the brush unit 4 is mounted in the circuit board 33.

A connector section 34 connectable to an outer connector (not shown) is installed at the lower case 32. The connector section 34 and the circuit board 33 are electrically connected to each other.

Here, an electric motor accommodating section 36 configured to accommodate a portion of the electric motor 2 is formed at the upper case 31 at a place at which the electric motor 2 is attached. An outer flange section 37 configured to attach the electric motor 2 is integrally formed with an outer circumferential portion of the electric motor accommodating section 36. The brush unit 4 is attached to the upper case 31 opposite to the electric motor 2 with the outer flange section 37 sandwiched therebetween.

The electric motor 2 is a so-called brushed motor configured to feed power using a brush 5. The electric motor 2 includes a cylindrical yoke housing 6 having an opening 6a and a bottom wall 6b, and an armature 7 rotatably installed in the yoke housing 6.

The yoke housing 6 is attached to the gear casing 3 in a state in which the opening 6a is directed to the gear casing 3 side. Two slits 9 into which nuts 8 can be inserted are formed at areas of the circumferential wall 6b of the yoke housing 6 close to the opening 6a.

Insertion holes 27 into which bolts 10 can be inserted as a fastening unit are formed at the outer flange section 37 of the gear casing 3 at areas corresponding to the nuts 8 inserted into the slits 9 of the yoke housing 6. As the bolts 10 are inserted into the insertion holes 27 and the bolts 10 are threaded into the nuts 8, the yoke housing 6 is fastened and fixed to the gear casing 3.

In addition, a permanent magnet 13 is installed at an inner surface of the circumferential wall 6b of the yoke housing 6.

Further, a bearing 12 configured to rotatably support one end of a rotary shaft 11 of the armature 7 is installed at a bottom wall 6c of the yoke housing 6. The bearing 12 protrudes from the bottom wall 6c toward the outside of the yoke housing 6 in an axial direction of the rotary shaft 11.

The armature 7 includes the rotary shaft 11, an armature core 14, and a commutator 15. The armature core 14 is fitted and fixed to an area of the outer circumferential portion of the rotary shaft 11 corresponding to the permanent magnet 13. The commutator 15 is fitted and fixed to an area of the outer circumferential portion of the rotary shaft 11 close to the gear casing 3. A winding 16 is wound and mounted on the armature core 14, and a terminal section of the winding 16 is connected to the commutator 15.

The commutator 15 having a columnar shape is disposed to face an inner wall of the electric motor accommodating section 36 of the gear casing 3. In the commutator 15, a plurality of segments (not shown) having a plate shape are installed in parallel at the outer circumferential surface. The terminal section of the winding 16 is connected to these segments. In addition, a pair of brushes 5 and 5 disposed at both sides with the commutator 15 sandwiched therebetween and constituting the brush unit 4 come in slidable contact with the commutator 15.

### (Brush Unit)

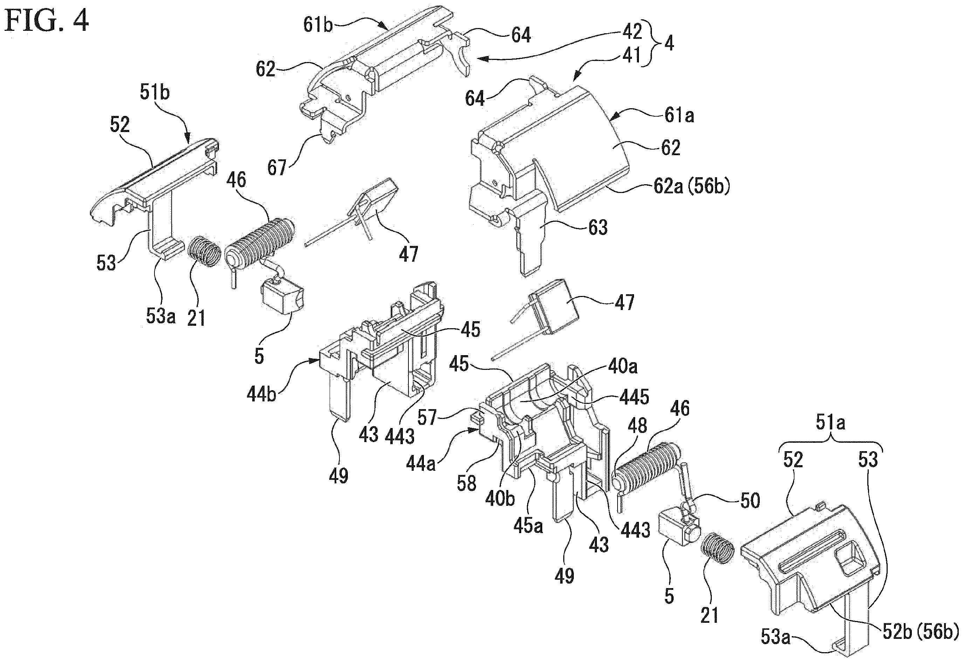

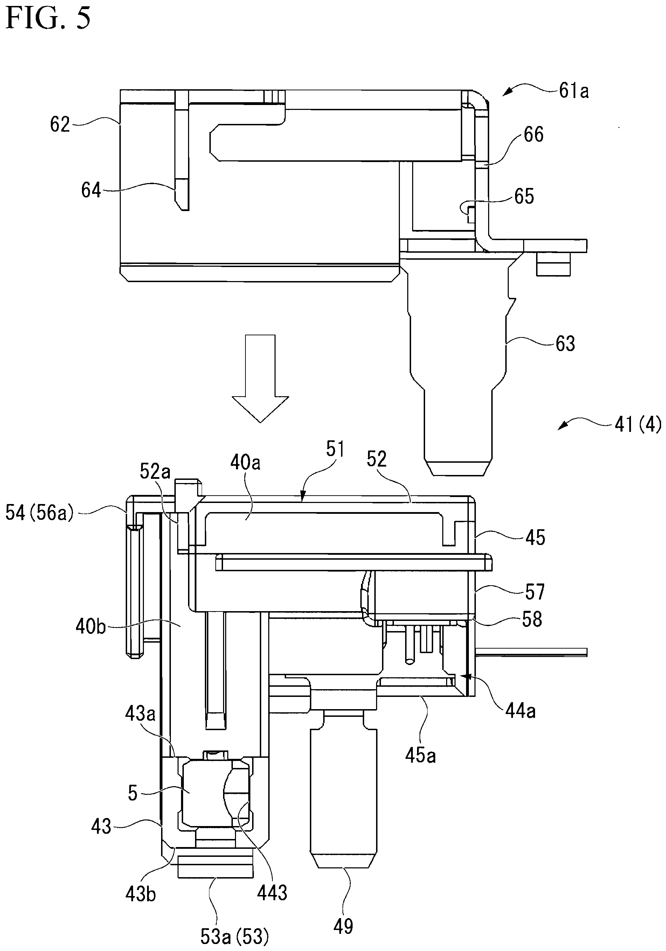

FIG. 4 is an exploded perspective view of the brush unit 4. FIG. 5 is a longitudinal cross-sectional view of a first unit 41 constituting the brush unit 4.

As shown in FIGS. 3 to 5, the brush unit 4 is constituted by two units 41 and 42 including the first unit 41 and a second unit 42, which correspond to the pair of brushes 5 and 5.

Here, specific configurations of the two units 41 and 42 are the same, and components thereof are substantially symmetrical with respect to the commutator 15. For this reason, in the following description, only the first unit 41 will be described in detail. For the second unit 42, only areas having different shapes from the first unit 41 will be described, common elements to the first unit 41 are designated by the same reference numerals as those of the first unit 41, and description thereof will be omitted.

The first unit 41 is installed to be detachable from an upper surface 31a of the upper case 31 constituting the gear casing 3 (an upper side of FIGS. 3 to 5, hereinafter, simply referred to as an upper side) opposite to the lower case 32. An outer surface side of the first unit 41 is covered by a GND terminal (i.e., electromagnetic shield) 61a. That is, the GND terminal 61a is installed at a side at which the output shaft 20a of the deceleration mechanism 20 is disposed with respect to an upper case 3. Accordingly, the motor with decelerator 1 is disposed in a state in which the GND terminal 61a and the output shaft 20a are directed to the roof 502 side.

The first unit 41 has a holder stay 44a with which a brush holder 43 configured to accommodate the brush 5 is integrally formed. The second unit 42 also has a holder stay 44b having the same shape. That is, in the embodiment, the holder stays 44a and 44b are divided and disposed to correspond to the brush holders 43 of the first unit 41 and second unit 42, respectively.

The brush 5 is configured to supply current to the winding 16 via the commutator 15, and has a quadrangular cross-sectional shape. One end of a pigtail 50 is connected to the base end side of the brush 5.

The brush holder 43 is formed of resin. The brush holder 43 has a quadrangular cylindrical shape to correspond to the cross-sectional shape of the brush 5, and openings 443 formed at both ends thereof as small openings. The brush 5 is accommodated in the brush holder 43 to advance and retreat with respect to the commutator 15. That is, the pair of brush holders 43 have the openings 443 formed at both ends in advancing and retreating directions of the brush 5, and accommodate the pair of brushes 5 to enable advance and retreat with respect to the commutator 15. The brush holders 43 are accommodated in the gear casing 3 when the brush unit 4 is attached to the gear casing 3.

That is, a concave section (an accommodating concave section) 38 configured to allow insertion of the first unit 41 and the second unit 42 from the outside is formed in the gear casing 3. An accommodating section 38a configured to accommodate the brush holder 43 is formed at an area of the concave section 38 corresponding to the brush holder 43. An opening (not shown) is formed at an area of the accommodating section 38a corresponding to the brush 5. A front end of the brush 5 slidably contacts a segment (not shown) of the commutator 15 via the opening.

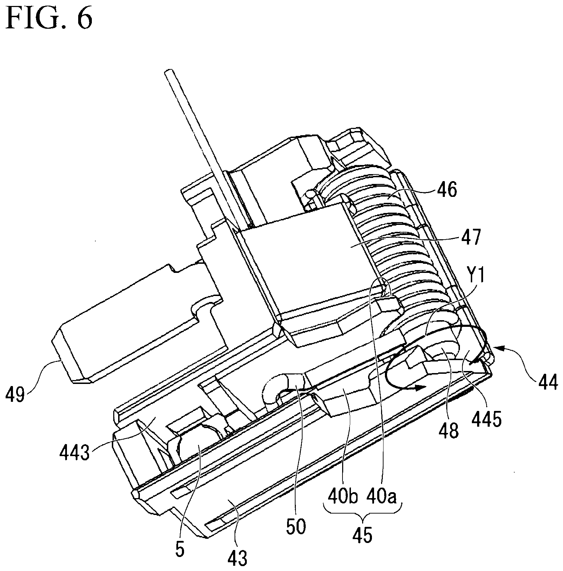

FIG. 6 is a perspective view of the holder stay 44a.

As shown in FIGS. 4 to 6, the holder stay 44a, which is formed of resin, is integrally formed with an upper surface 43a of the brush holder 43 to be disposed at an outer surface of the gear casing 3. Then, the holder stay 44a is configured to protrude from the brush holder 43 toward the second unit 42 side (a left side of FIG. 4) along the concave section 38 of the upper case 31. A box-shaped device accommodating section 45 having an opening 445 formed at the outside as a large opening is formed at an area thereof protruding toward the second unit 42 side.

The device accommodating section 45 is configured by integrally forming an accommodating section main body 40a configured to accommodate a choke coil 46 and a condenser 47 as a noise prevention device and a pigtail accommodating section 40b configured to accommodate the pigtail 50 of the brush 5 with each other. The accommodating section main body 40a is in communication with the pigtail accommodating section 40b. A male terminal 49 is installed at a bottom wall 45a of the accommodating section main body 40a in the vicinity of the pigtail accommodating section 40b.

The male terminal 49 is configured to extend from the bottom wall 45a in an attachment/detachment direction (a vertical direction of FIGS. 4 and 5) of the first unit 41. The male terminal 49 is connected to the female terminal 35a of the circuit board 33 accommodated in the lower case 32 in a state in which the first unit 41 is attached to the upper case 31.

The choke coil 46 is accommodated in the device accommodating section 45 at a position closer to the second unit 42.

The other end of the pigtail 50 is connected to one end of the choke coil 46. In addition, the choke coil 46 is wound about an axle 48.

A winding direction of the choke coil 46 is set to a left rotation direction (see an arrow Y1 of FIG. 6) from one end side of the choke coil 46, that is, one end side of the axle 48 (an end portion close to the pigtail accommodating section 40b in FIG. 6) toward the other end side (an end portion far from the pigtail accommodating section 40b in FIG. 6).

The other end of the choke coil 46 is connected to the male terminal 49. Accordingly, current is supplied to the brush 5 via the female terminal 35a of the circuit board 33, the male terminal 49 of the first unit 41, the choke coil 46, and the pigtail 50.

In addition, one end of the condenser 47 is connected to the male terminal 49. The condenser 47 is accommodated in the device accommodating section 45 opposite to the second unit 42 (a right side of FIGS. 4 and 6), that is, the outside of the choke coil 46.

Further, the other end of the condenser 47 is connected to the GND terminal 61a. Accordingly, the choke coil 46 is serially connected to a power feeding line between the brush 5 and the male terminal 49. Meanwhile, the condenser 47 is installed in parallel with the choke coil 46. As a result, a cover 51a configured to close the outside of the holder stay 44a is attached to the holder stay 44a in which the choke coil 46 and the condenser 47 are accommodated.

As shown in FIGS. 3 to 5, the cover 51a is constituted by a cover main body 52 and a spring stopper 53, which are integrally formed with each other. The cover main body 52 closes the opening of the accommodating section main body 40a of the holder stay 44a and the opening 445 of the device accommodating section 45, which is a portion of the opening of the pigtail accommodating section 40b. The spring stopper 53 closes a portion of the opening of the pigtail accommodating section 40b and the opening 443 of the base end side of the brush holder 43.

A claw section 53a bent and extending to turn toward a lower surface 43b of the brush holder 43 is formed at a front end of the spring stopper 53. As the brush holder 43 and the holder stay 44a are sandwiched and held by the claw section 53a and the cover main body 52, the cover 51a is attached to the holder stay 44a. The spring stopper 53 is accommodated in the accommodating section 38a formed in the concave section 38 of the gear casing 3 with portions of the brush holder 43 and the holder stay 44a.

Here, a coil spring 21 configured to bias the brush 5 toward the commutator 15 is accommodated in the brush holder 43. When the cover 51a is attached to the brush holder 43, one end of the coil spring 21 is supported by the spring stopper 53 of the cover 51a. Accordingly, the other end of the coil spring 21 securely biases the brush 5 toward the commutator 15.

Meanwhile, a hook section 54 having an L-shaped cross section is formed at a side edge 52a of the electric motor 2 side (a left side in FIG. 5) of the cover main body 52 to extend toward the electric motor 2. In addition, the hook section 54 is formed to surround a circumferential edge of the outer flange section 37 of the gear casing 3.

Meanwhile, a convex section 55 disposed to face the inside of the hook section 54 is formed at the circumferential edge of the outer flange section 37. The convex section 55 is continuously formed along the circumferential edge of the outer flange section 37. The convex section 55 of the embodiment has an arc shape along the circumferential edge of the arc-shaped outer flange section 37.

In a state in which the brush unit 4 is attached to the gear casing 3, a labyrinth section 56a is formed at a gap between the cover main body 52 and the gear casing 3 by the hook section 54 and the convex section 55.

In a state in which the brush unit 4 is attached to the gear casing 3, a side edge 52b of the spring stopper 53 side of the cover main body 52 is formed to protrude toward the outside of the gear casing 3 more than the circumferential edge of the concave section 38, that is, toward an opposite side of the second unit 42. Then, the labyrinth sections 56a and 56b are formed in the gap between the cover main body 52 and the gear casing 3 by the side edge 52b of the cover main body 52, the circumferential edge of the concave section 38 of the gear casing 3, and the GND terminal 61a. Here, the circumferential edge of the cover main body 52 is disposed between the concave section 38 and the circumferential edge of the holder stay 44a. That is, the labyrinth sections 56a and 56b are formed between the circumferential edge of the concave section 38 and the circumferential edge of the holder stay 44a corresponding to the circumferential edge of the concave section 38.

A cutout portion 58 is formed in a sidewall 57 of the cover main body 52 at an opposite side (a left side in FIG. 5) of the outer flange section 37 of the gear casing 3. The cutout portion 58 integrates with the holder stay 44a and the GND terminal 61a as the cutout portion 58 is engaged with a convex section 65 (to be described later) formed in the GND terminal 61a.

The GND terminal 61a is formed by performing press processing on a metal plate formed of, for example, brass, or the like. The GND terminal 61a is configured by integrally forming a terminal main body 62 configured to cover the cover main body 52 of the cover 51a from the outside thereof and a GND terminal 63 extending from the circumferential edge of the terminal main body 62 to the lower case 32 side (a lower side of FIGS. 3 to 5, hereinafter, simply referred to as a lower side).

A Y terminal section 64 is integrally formed with the terminal main body 62 adjacent to the outer flange section 37 of the gear casing 3 at an area corresponding to the insertion hole 27. That is, the respective GND terminals 61a and 61b of the two units 41 and 42 have the Y terminal sections 64, which are disposed to oppose each other. The Y terminal sections 64 are fastened by the bolt 10 and the nut 8 with the outer flange section 37 of the gear casing 3 and the yoke housing 6 of the electric motor 2. Accordingly, the GND terminal 61a is fastened and fixed to the gear casing 3, and movement in a removal direction of the holder stay 44a is restricted by the GND terminal 61a.

In addition, the Y terminal section 64 is electrically connected to the Y terminal section 64 formed at a GND terminal 61b of the second unit 42 and the yoke housing 6 via the bolt 10 configured to fasten and fix the gear casing 3 and the yoke housing 6. That is, the GND terminals 61a and 61b are divided such that the GND terminals, which were an integrated member in the related art, correspond to the pair of brushes 5 and 5. In a state in which the Y terminal section 64 of the first unit 41 and the Y terminal section 64 of the second unit 42 are attached to the gear casing 3, a gap S as shown in FIG. 2 is formed between the Y terminal sections 64 and 64.

In addition, in the terminal main body 62, the convex section 65 is formed in a sidewall 66 overlapping the sidewall 57 of the holder stay 44a to protrude toward the sidewall 57 of the holder stay 44a. The convex section 65 is disposed at a position corresponding to the cutout portion 58 formed in the holder stay 44a, and engaged with the cutout portion 58. Accordingly, the holder stay 44a, the cover 51a, and the GND terminal 61a are integrated with each other.

Further, a side edge 62a of the terminal main body 62 opposite to the second unit 42 is formed to extend from the side edge 52b toward the lower side to cover the side edge 52b of the cover main body 52. The extended portion constitutes a portion of a labyrinth section 56b.

The GND terminal of the GND terminal 61a extends to arrive at the circuit board 33 passing through the upper case 31 and accommodated in the lower case 32. A female terminal 35b connectable to the GND terminal 63 is mounted in the circuit board 33. As the GND terminal 63 is connected to the female terminal 35b, the GND terminals 61a and 61b are grounded to the GND.

Here, differences in shapes of the holder stay 44b constituting the second unit 42 and the GND terminal 61b with respect to shapes of the holder stay 44a and the GND terminal 61a constituting the first unit 41 will be described based on FIG. 4.

First, in the holder stay 44a of the first unit 41, the male terminal 49 is installed in a standing state in the vicinity of the pigtail accommodating section 40b in the bottom wall 45a of the accommodating section main body 40a. On the other hand, in the holder stay 44b of the second unit 42, the male terminal 49 is installed in a standing state at the bottom wall 45a of the accommodating section main body 40a opposite to the pigtail accommodating section 40b.

In addition, while the GND terminal 63 is installed at the GND terminal 61a of the first unit 41, the GND terminal 63 is not installed at the GND terminal 61b of the second unit 42. This is because the GND terminal 61a of the first unit 41 and the GND terminal 61b of the second unit 42 are electrically connected to each other via the bolt 10.

Then, instead of the GND terminal 63, a tongue-shaped section 67 is bent downward at the GND terminal 61b of the second unit 42 opposite to the Y terminal section 64 of the terminal main body 62. Meanwhile, a slit 29 is formed in an area of the upper case 31 of the gear casing 3 corresponding to the tongue-shaped section 67. As the tongue-shaped section 67 enters the slit 29, looseness of the GND terminal 61b of the second unit 42 is prevented.

### (Assembly Method of Brush Unit)

Next, an assembly method of the brush unit 4 will be described based on FIGS. 3 to 6. The first unit 41 and the second unit 42 constituting the brush unit 4 are assembled to the gear casing 3 through the same assembly method. For this reason, in the following description, the assembly method of the first unit 41 will be described, and the assembly method of the second unit 42 will be omitted.

First, the male terminal 49 is assembled to the holder stay 44a. Then, the other end of the pigtail 50 is connected to one end of the choke coil 46 through spot welding or the like. After that, the choke coil 46 is accommodated in the device accommodating section 45, and the brush 5 is accommodated in the brush holder 43.

Next, the condenser 47 is accommodated in the device accommodating section 45. After the choke coil 46 and the condenser 47 are accommodated in the device accommodating section 45, the coil spring 21 is accommodated from the base end side (a rear side in a direction in which the brush 5 is biased) of the brush 5 of the brush holder 43. After that, the cover 51a is attached to the holder stay 44a. Then, the other end of the choke coil 46 and one end of the condenser 47 are connected to the male terminal 49 through soldering or the like.

Next, the GND terminal 61a is attached from above the cover 51a. Here, the convex section 65 of the GND terminal 61a is engaged with the cutout portion 58 of the holder stay 44a. Accordingly, the GND terminal 61a is prevented from being easily dropped from the holder stay 44a. In this state, the other end of the condenser 47 is connected to the GND terminal 61a through spot welding or the like. Accordingly, assembly of the first unit 41 is completed.

Next, the first unit 41 and the second unit 42 are attached to the concave section 38 of the gear casing 3. Here, the brush holders 43 and 43 of the units 41 and 42 are directed toward the concave section 38 to assemble the units 41 and 42 from above the upper case 31. In addition, when the units 41 and 42 are assembled, a front end of the brush 5 is pressed using a jig (not shown) such that a front end of the brush 5 accommodated in the brush holder 43 does not protrude. Then, the jig is removed while the brush holders 43 and 43 are inserted into the accommodating section 38a of the concave section 38.

Here, the first unit 41 and the second unit 42 can be separately assembled to the gear casing 3. For this reason, the units 41 and 42 can be smoothly assembled regardless of manufacturing precision of the gear casing 3.

That is, for example, when the units 41 and 42 are integrally formed with each other, assembly of the units 41 and 42 becomes difficult when a difference between a distance between the brush holders 43 and 43 and a distance between the accommodating sections 38a and 38a of the gear casing 3 is generated.

However, in the first embodiment, the first unit 41 and the second unit 42 are separately assembled to the gear casing 3. In addition, in a state in which the Y terminal section 64 of the first unit 41 and the Y terminal section 64 of the second unit 42 are attached to the gear casing 3, the gap S is formed between the Y terminal sections 64 and 64 as shown in FIG. 2. For this reason, a dimensional error of the units 41 and 42 can be absorbed or offset and can be securely and precisely assembled without interference between the Y terminal sections 64.

In addition, the labyrinth sections 56a and 56b are formed at a gap between the circumferential edge of the concave section 38 formed at the upper case 31 of the gear casing 3 and the circumferential edge of the cover main body 52 of the units 41 and 42. That is, the labyrinth sections 56a and 56b are installed between the circumferential edge of the concave section 38 and the circumferential edge of the holder stay 44a corresponding to the circumferential edge of the concave section 38. For this reason, infiltration of dust into the gear casing 3 can be prevented without maintaining high precision of a dimensional relation between the upper case 31 and the units 41 and 42. In other words, in order to form the labyrinth sections 56a and 56b, looseness is maintained between the upper case 31 and the units 41 and 42. In addition, the dimensional error between the gear casing 3 and the units 41 and 42 can be absorbed by the looseness.

Next, after the units 41 and 42 are attached to the gear casing 3, the GND terminals 61a and 61b are fastened and fixed to the gear casing 3 by the bolt 10. Accordingly, assembly of the first unit 41 and the second unit 42 to the gear casing 3 is completed.

When the motor with decelerator 1 to which the units 41 and 42 are assembled as described above is driven, an outer connector connected to an external power supply (not shown) is connected to the connector section 34 installed at the gear casing 3. Then, current is supplied to the brush 5 via the circuit board 33, and current is further supplied to the winding 16 of the armature 7 via the commutator 15 in sliding contact with the brush 5.

When the current is supplied to the winding 16, a magnetic field is generated from the armature core 14, and magnetic attraction or repulsion is generated between the permanent magnets 13 installed at the yoke housing 6. Accordingly, the armature 7 is rotated.

Here, according to rotation of the armature 7, a surge voltage is generated by self induction when the brush 5 in a power-on state covers the segment (not shown) of the commutator 15. Electromagnetic noise is radiated from the sliding contact section between the brush 5 and the commutator 15 by the surge voltage. However, since the GND terminals 61a and 61b are installed at the first unit 41 and the second unit 42 constituting the brush unit 4, influence of the electromagnetic noise can be suppressed.

Here, an antenna may be installed on the roof 502, to which the motor with decelerator 1 is attached, as an information transmission reception unit of a communication instrument, for example, a car navigation system or the like. In this case, the electromagnetic noise due to the motor with decelerator 1 may exert an influence on the communication instrument. However, the motor with decelerator 1 is disposed in a state in which the GND terminals 61a and 61b are directed toward the roof 502. That is, the GND terminals 61a and 61b are disposed between the information transmission reception unit of communication instrument and the brush 5. Accordingly, influence of the electromagnetic noise on the antenna can be prevented.

In addition, as shown in FIG. 6, the choke coil 46 is wound leftward when the choke coil 46 is wound from one end side close to the pigtail accommodating section 40b of the axle 48 toward the other end side separated from the pigtail accommodating section 40b. Further, the condenser 47 is accommodated in the device accommodating section 45 at an opposite side (a right side of FIGS. 4 and 6) of the second unit 42, that is, the outside of the choke coil 46. For this reason, an electromagnetic noise at a specified frequency range is reduced.

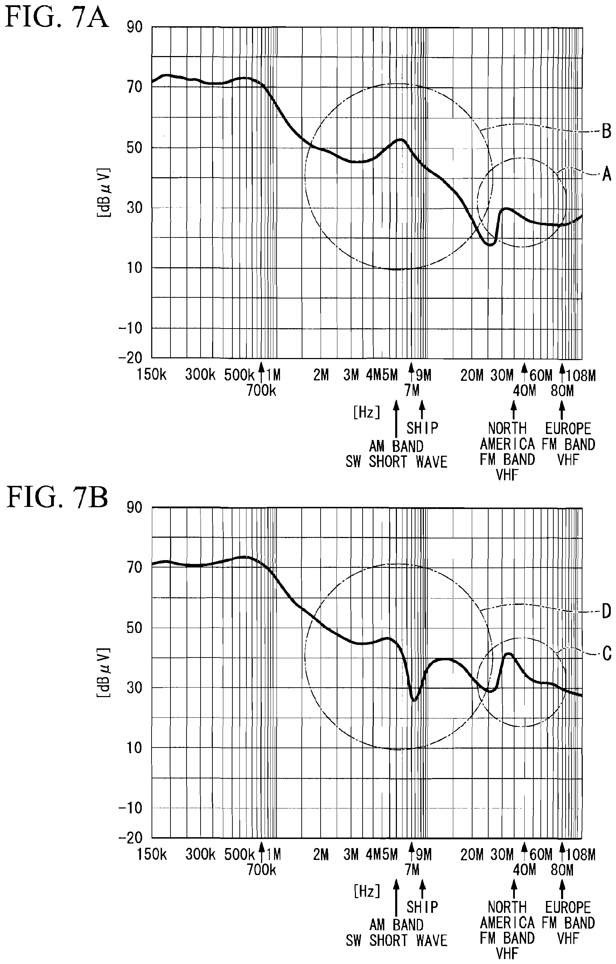

This will be described in more detail based on FIGS. 7A and 7B.

FIGS. 7A and 7B are graphs of electromagnetic noise upon driving of a motor, with a vertical axis representing a strength in "dBµV" of the electromagnetic noise and a horizontal axis representing a frequency in "Hz." FIG. 7A shows a case in which the choke coil 46 is wound as in the first embodiment. FIG. 7B shows a case in which the choke coil 46 is wound in a direction opposite to that of FIG. 7A.

As shown in FIG. 7A, when the choke coil 46 is wound as in the first embodiment, the electromagnetic noise at the radio frequency range is reduced (see a portion A of FIG. 7A). Meanwhile, the electromagnetic noise at the intermediate frequency range is slightly increased (see a portion B of FIG. 7A).

On the other hand, as shown in FIG. 7B, when the choke coil 46 is wound in a direction opposite to that of the first embodiment, the electromagnetic noise at the radio frequency range is increased (see a portion C of FIG. 7B). Meanwhile, the electromagnetic noise at the intermediate frequency range is reduced (see a portion D of FIG. 7B).

As a result, a direction in which the choke coil 46 is wound can also be varied according to circumstances in which the motor with decelerator 1 is used.

### (Effects)

In the above-mentioned first embodiment, the brush holders 43 are integrally formed with the holder stays 44a and 44b corresponding to the brush holders 43. Accordingly, according to the above-mentioned first embodiment, in comparison with the case in which only the brush holder 43 is assembled with respect to the gear casing 3 as in the related art, assembly workability of the brush holders 43 can be improved.

That is, as functions of the holder stays 44a and 44b are provided to the brush holder 43 side rather than the gear casing 3 side, parts configured to assemble the brush 5 can be increased in size without increasing the entire size of the motor with decelerator 1. In addition, the holder stays 44a and 44b are separately formed such that the holder stays 44a and 44b correspond to the pair of brushes 5. For this reason, assembly workability of the brush holders 43 can be improved.

In addition, since the holder stays 44a and 44b are integrated with the brush holders 43 to increase the size of the parts in comparison with a single body brush holder 43, dimension management of the parts becomes easy, and assembly workability of the brush holder 43 can be improved.

Further, the labyrinth sections 56a and 56b are formed in a gap between the circumferential edge of the concave section 38 formed at the upper case 31 of the gear casing 3 and the circumferential edge of the cover main body 52 of the units 41 and 42. That is, the labyrinth section 56a is installed between the circumferential edge of the concave section 38 and the circumferential edge of the holder stay 44a corresponding to the circumferential edge of the concave section 38. Accordingly, the looseness can be maintained between the upper case 31 and the units 41 and 42. That is, processing precision of the concave section 38 of the upper case 31 and the cover main body 52 of the units 41 and 42 can be relaxed, manufacturing cost can be reduced, and infiltration of dust into the gear casing 3 can be prevented.

Then, since the GND terminals 61a and 61b divided to correspond to the units 41 and 42 are installed at the units 41 and 42, respectively, influence of the electromagnetic noise can be suppressed.

In addition, the brush 5, the brush holder 43, the holder stays 44a and 44b, and the electromagnetic shields 61a and 61b are assembled to the gear casing 3 and integrated with each of the pair of brushes 5. For this reason, the brush 5, the brush holder 43, the holder stays 44a and 44b, and the electromagnetic shields 61a and 61b can be collectively assembled, and the assembly workability can be further improved.

Further, the GND terminals 61a and 61b are electrically connected to the yoke housing 6 via the bolt 10 configured to fasten and fix the gear casing 3 and the yoke housing 6 in a state in which the Y terminal sections 64 are disposed to oppose each other. For this reason, when the yoke housing 6 is attached to the gear casing 3, the GND terminals 61a and 61b can be simultaneously attached to the gear casing 3, an assembly task can be easily performed, and the electromagnetic noise generated from the electric motor 2 can be suppressed.

Then, since the motor with decelerator 1 is disposed in a state in which the GND terminal (i.e., electromagnetic shield) 61a and the output shaft 20a are directed toward the roof 502, influence of the electromagnetic noise on the antenna installed on the roof 502 of the vehicle 501 can be prevented. For this reason, the sunroof drive device 500 having high reliability can be provided.

### (Second Embodiment)

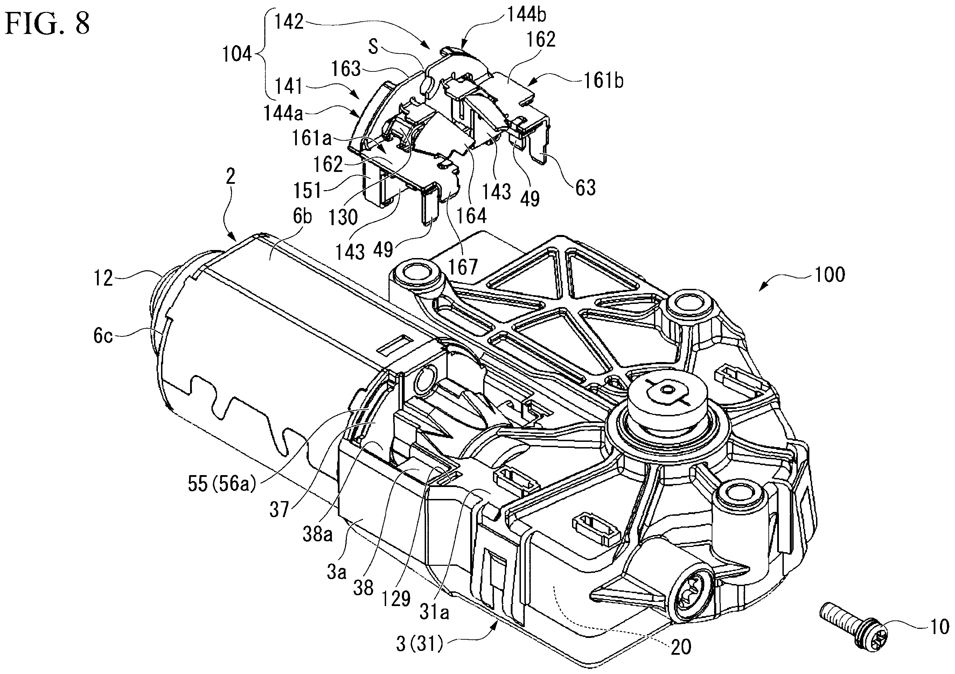

Next, a second embodiment of the present invention will be described based on FIGS. 8 to 11 with reference to FIG. 1.

In addition, aspects that are the same as in the first embodiment will be described with the same reference numerals.

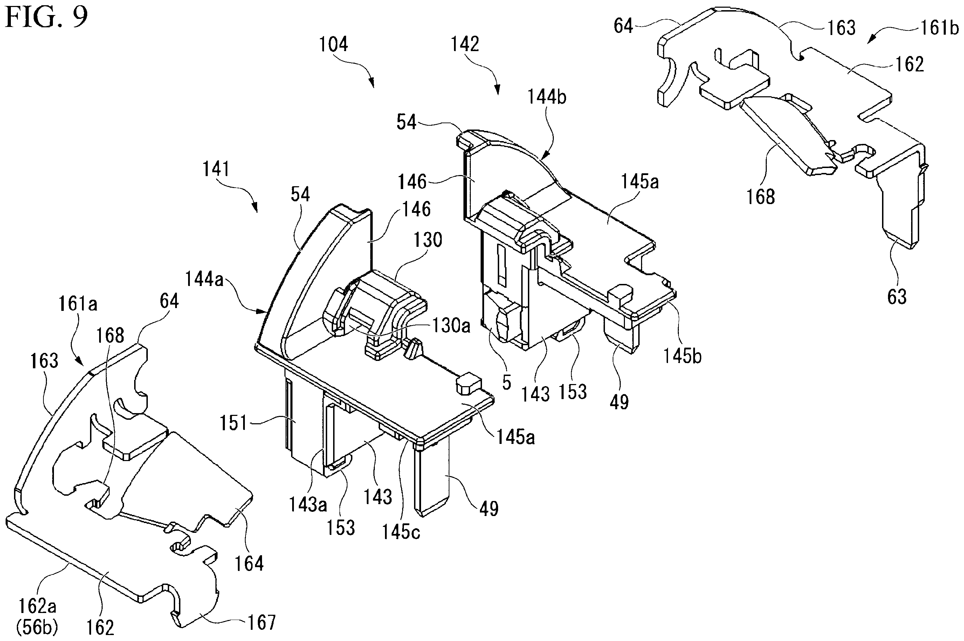

FIG. 8 is a perspective view of a motor with decelerator 100 according to the second embodiment. FIG. 9 is an exploded perspective view of a brush unit 104 according to the second embodiment.

In the second embodiment, a basic configuration of the motor with decelerator 100 is the same as the above-mentioned first embodiment as follows. The motor with decelerator 100 is attached to the roof 502 of the vehicle 501 using the sunroof drive device 500. The motor with decelerator 100 includes the electric motor 2, and the gear casing 3 in which the deceleration mechanism 20 is accommodated, and the brush unit 104 is attached to the upper case 31 of the gear casing 3. The electric motor 2 is a so-called brushed motor configured to supply power using the brush 5.

Here, a difference between the second embodiment and the first embodiment is as follows. While the choke coil 46 and the condenser 47 are installed at the brush unit 4 of the first embodiment, the choke coil 46 and the condenser 47 are not installed at the brush unit 104 of the second embodiment.

### (Brush Unit)

As shown in FIGS. 8 and 9, the brush unit 104 is constituted by two units 141 and 142, that is, a first unit 141 and a second unit 142, which correspond to the pair of brushes 5 and 5.

Here, basic configurations of the two units 141 and 142 are the same, and the respective components are formed substantially symmetrically with respect to the commutator 15. For this reason, in the following description, only the first unit 141 will be described in detail. For the second unit 142, parts having different shapes from the first unit 141 will be described, common configurations to the first unit 141 are designated by the same reference numerals as those of the first unit 141 and description thereof will be omitted.

The first unit 141 is detachably installed at the upper surface 31a of the upper case 31 constituting the gear casing 3, and an outer surface side thereof is covered by a GND terminal 161a. That is, the motor with decelerator 100 is disposed in a state in which the GND terminals 161a and 161b are directed toward the roof 502. Accordingly, the GND terminals 161a and 161b are disposed between the roof 502 and the brush 5. The first unit 141 has a holder stay 144a with which a brush holder 143 is integrally formed to accommodate the brush 5.

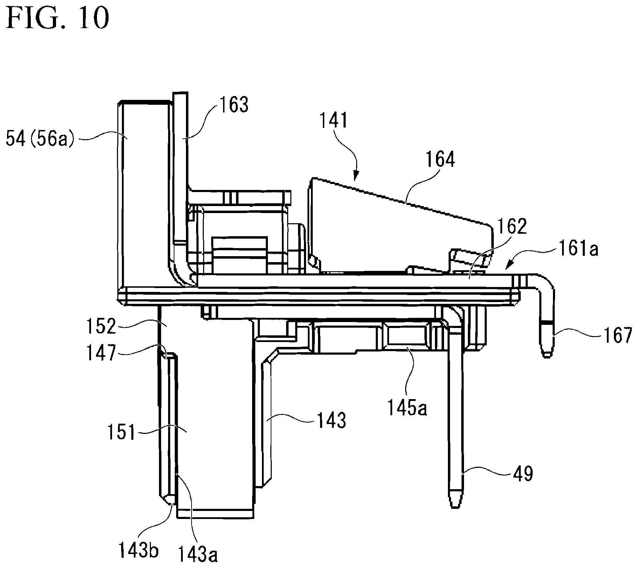

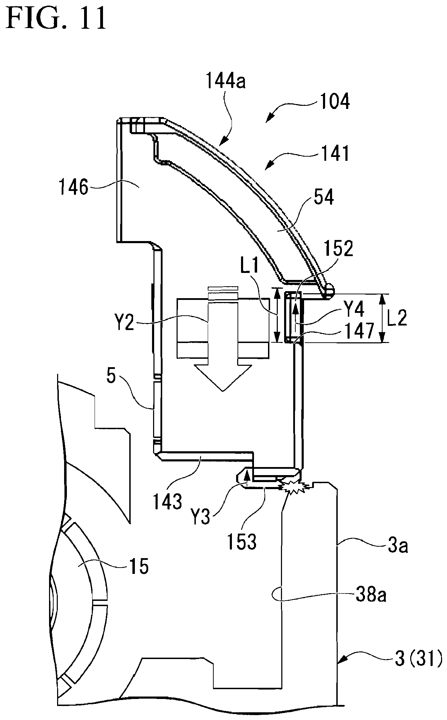

FIG. 10 is a side view of the first unit 141. FIG. 11 is a front view of the first unit 141.

As shown in FIGS. 8 to 11, the holder stay 144a of the first unit 141 is formed of resin. The holder stay 144a is integrally formed with an upper portion of the brush holder 143 to be disposed on an outer surface of the gear casing 3. Then, the holder stay 144a has a base section 145a formed along the concave section 38 of the upper case 31.

A front wall 146 standing up to correspond to the outer flange section 37 of the gear casing 3 is integrally formed at the electric motor 2 side (a left side of FIG. 10) of the base section 145a.

The hook section 54 having an L-shaped cross-section is formed at the circumferential edge of the front wall 146 to extend toward the electric motor 2. In addition, the hook section 54 is formed to surround the circumferential edge of the outer flange section 37 of the gear casing 3. Then, the labyrinth section 56a is formed at a gap between the holder stay 144a and the gear casing 3 by the hook section 54 and the convex section 55 formed in the outer flange section 37.

In addition, in a state in which the brush unit 104 is attached to the gear casing 3, a side edge 145c of the base section 145a opposite to the second unit 142 is formed to protrude toward the outside more than the circumferential edge of the concave section 38 of the gear casing 3. Then, the labyrinth section 56b is formed at the gap between the holder stay 144a and the gear casing 3 by the side edge145c of the base section 145a, the circumferential edge of the concave section 38 of the gear casing 3, and the GND terminal 161a (to be described later).

Further, an engaging section 130 configured to attach the GND terminal 161a is integrally formed with an upper surface of the base section 145a.

Here, a spring stopper 151 configured to close an opening 143a of a base end side (a front side of FIG. 10) of the brush 5 is formed at the brush holder 143. The spring stopper 151 is formed of a resin plate member and has a rectangular shape to correspond to the opening 143a of the brush holder 143 when seen in a plan view.

A claw section 153 bent and extending to surround a lower surface 143b of the brush holder 143 is formed at a lower end of the spring stopper 151. Meanwhile, a tongue-shaped section 152 extending toward the electric motor 2 of FIG. 8 is formed at an upper end of the spring stopper 151.

In addition, a cutout portion 147 configured to receive the tongue-shaped section 152 is formed at an area of the brush holder 143 corresponding to the tongue-shaped section 152. As the cutout portion 147 is engaged with the tongue-shaped section 152 and the claw section 153 is engaged with the lower surface 143b of the brush holder 143, the spring stopper 151 is attached to the opening 143a of the brush holder 143.

As shown in FIG. 11, the cutout portion 147 formed in the brush holder 143 is opened at the outside thereof with respect to the commutator 15. The base section 145a is slightly cut such that the upper end of the cutout portion 147 is disposed above the upper end of the opening. For this reason, a length L1 in a longitudinal direction of the cutout portion 147 is set to be greater than a length L2 in a longitudinal direction of the tongue-shaped section 152 of the spring stopper 151. Accordingly, the tongue-shaped section 152 can be slightly slidably moved toward the base section 145a in the longitudinal direction of the brush holder 143.

In addition, the coil spring 21 configured to bias the brush 5 toward the commutator 15 is accommodated in the brush holder 143. As the spring stopper 151 is attached to the brush holder 143, the coil spring 21 securely biases the brush 5 toward the commutator 15.

The GND terminal 161a is formed by perfomring press processing or the like on a metal plate formed of, for example, brass or the like. The GND terminal 161a has a terminal base 162 configured to cover the base section 145a of the spring stopper 151. A front wall shield section 163 configured to cover one surface of the front wall 146 integrally formed with the holder stay 144a is bent and formed at the terminal base 162.

The Y terminal section 64 is integrally formed with the front wall shield section 163. Even in the Y terminal section 64 of the second embodiment, similar to the first embodiment, a gap S is formed between the Y terminal sections 64 and 64 as shown in FIG. 8 in a state in which the units 141 and 142 are attached to the gear casing 3.

In addition, a side edge 162a of the terminal base 162 opposite to the second unit 142 extends toward the outside more than the base section 145a of the spring stopper 151. The extended portion constitutes a portion of the labyrinth section 56b.

Further, an auxiliary shield section 164 extending to bend toward the second unit 142 is integrally formed with the terminal base 162 opposite to the front wall shield section 163.

Furthermore, in the terminal base 162, a claw section 168 engageable with the engaging section 130 is formed between the front wall shield section 163 and the auxiliary shield section 164 and at an area thereof corresponding to the engaging section 130 of the holder stay 144a. A hole 130a into which the claw section 168 of the GND terminal 161a can be inserted is formed in the engaging section 130 of the holder stay 144a. As the claw section 168 is press-fitted into the hole 130a, the holder stay 144a and the GND terminal 161a are integrated with each other.

In addition, a GND terminal 63 extends to be bent downward at a GND terminal 161b of the second unit 142 opposite to the front wall shield section 163 of the terminal base 162b. Accordingly, when the two GND terminals 161a and 161b are fastened and fixed to the gear casing 3 by the bolt 10, both of the GND terminals 161a and 161b are electrically connected, and influence of the electromagnetic noise can be suppressed.

Meanwhile, instead of the GND terminal 63, a tongue-shaped section 167 is formed to bend downward at the GND terminal 161a of the first unit 141 opposite to the front wall shield section 163 of the terminal base 162. A slit 129 is formed at an area of the upper case 31 of the gear casing 3 corresponding to the tongue-shaped section 167, and the tongue-shaped section 167 is inserted thereinto. Accordingly, the looseness of the GND terminal 161a of the first unit 141 is prevented.

### (Assembly Method of Brush Unit)

Next, an assembly method of the brush unit 104 of the second embodiment will be described based on FIG. 11.

FIG. 11 is a view for explaining the assembly method of the brush unit 104. Both assembly methods of the first unit 141 and the second unit 142 constituting the brush unit 104 are the same. Accordingly, in the following description, only the assembly method of the first unit 141 will be described, and description of the assembly method of the second unit 142 will be omitted.

First, the male terminal 49 is attached to the holder stay 144a, the brush 5 is accommodated in the brush holder 143, and the pigtail 50 of the brush 5 (not shown in the second embodiment) is connected to the male terminal 49 through soldering or the like.

Next, the coil spring 21 (not shown in the second embodiment) is accommodated from the base end side (a right side of FIG. 11) of the brush 5 of the brush holder 143 to attach the spring stopper 151. After that, the GND terminal 161a is attached to the holder stay 144a.

Next, the first unit 141 and the second unit 142 are attached to the concave section 38 of the gear casing 3. Here, the brush holders 143 and 143 of the units 141 and 142 are directed toward the concave section 38, and the units 141 and 142 are assembled from above the upper case 31 (see an arrow Y2 of FIG. 11). In addition, a front end of the brush 5 is pushed to assemble the units 141 and 142 using a jig (not shown) such that the front end of the brush 5 accommodated in the brush holder 43 does not protrude. Then, the jig is removed while inserting the brush holders 143 and 143 into the accommodating section 38a of the concave section 38.

Here, when the brush holder 143 is accommodated in the accommodating section 38a of the concave section 38, the claw section 153 of the spring stopper 151 may collide with a circumferential wall 3a of the gear casing 3. In this case, an upward force is applied to the claw section 153 as shown by an arrow Y3 of FIG. 11. Then, according to the above, an upward force is applied to the tongue-shaped section 152 as shown by an arrow Y4 of FIG. 11.

A length L1 in a longitudinal direction of the cutout portion 147 formed in the brush holder 143 is set to be greater than a length L2 in a longitudinal direction of the tongue-shaped section 152 of the spring stopper 151. For this reason, when an upward force is applied to the tongue-shaped section 152, the tongue-shaped section 152 slightly slidably moves toward the base section 145a in the longitudinal direction of the brush holder 143. For this reason, the spring stopper 151 can be prevented from being dropped from the brush holder 143.

After the units 141 and 142 are attached to the gear casing 3, the GND terminals 161a and 161b are fastened and fixed to the gear casing 3 by the bolt 10. Accordingly, assembly of the first unit 141 and the second unit 142 is completed.

According to the above-mentioned second embodiment, the same effects as in the above-mentioned first embodiment can be obtained.

In addition, as described in the above-mentioned first embodiment, as the motor with decelerator 100 in which the choke coil 46 or the condenser 47 is not installed is provided, variation of the motor with decelerator can be increased. For this reason, the motor with decelerator can be appropriately provided according to a demand of a user.

Hereinabove, while exemplary embodiments of the present invention have been described, the present invention is not limited to the embodiments. The present invention is not limited to the above description but limited only by the accompanying claims.

For example, in the above-mentioned embodiments, the case in which the motor with decelerator 1 or 100 includes the electric motor 2 and the gear casing 3 in which the deceleration mechanism 20 is accommodated, and the brush unit 4 or 104 is attached to the upper case 31 of the gear casing 3 has been described. However, in another example, not part of the claimed invention, the brush unit 4 or 104 may be attached to the electric motor 2 only.

### [Industrial Applicability]

According to the electric motor, the motor with decelerator, and the sunroof drive device, assembly workability of the brush holder can be improved and assembly precision of the brush holder can be increased.

### [Description of Reference Numerals]

1, 100 motor with decelerator
2 electric motor
3 gear casing
4, 104 brush unit
7 armature
10 bolt (fastening unit)
11 rotary shaft
15 commutator
20 deceleration mechanism
38 concave section (accommodating concave section)
38a accommodating section
43 brush holder
44a, 44b holder stay
56a, 56b labyrinth section
61a, 61b, 161a, 161b GND terminal (electromagnetic shield)
500 sunroof drive device
501 vehicle
502 roof
503 roof panel

## Claims

1. A motor with decelerator (1) comprising:
an electric motor (2) including: a pair of brushes (5) disposed at both sides with a commutator (15), which is installed in an armature (7), sandwiched therebetween and in sliding contact with the commutator (15) to feed power; a pair of brush holders (43) configured to accommodate the pair of brushes (5) to advance and retreat with respect to the commutator (15); and holder stays (44a, 44b) configured to support the brush holders (43), the brush holders (43) and the holder stays (44a, 44b) being integrally formed with each other by resin;
a gear casing (3) integrally attached to the electric motor (2); and
a deceleration mechanism (20) accommodated in the gear casing (3) and connected to a rotary shaft (11) of the electric motor (2),
wherein an accommodating concave section (38) configured to accommodate the holder stays (44a, 44b) and the brush holder (43) is formed at the gear casing (3),
the accommodating concave section (38) is configured to attach the holder stay (44a, 44b) and the brush holder (43), **characterized in that**,
electromagnetic shields (61a, 61b) configured to suppress influence of electromagnetic noise are installed at the outsides of the holder stays (44a, 44b),
the holder stays (44a, 44b) are divided to correspond to the brush holders (43) respectively, and
the electromagnetic shields (61a, 61b) are divided to correspond to the holder stays (44a, 44b) respectively.

2. A motor with decelerator according to Claim 1,
wherein a labyrinth section (56a, 56b) is formed between a circumferential edge of the accommodating concave section (38) and an area of the holder stay (44a, 44b) corresponding to the circumferential edge.

3. The motor with decelerator according to claim 1, wherein, in a state in which the electromagnetic shields (61a, 61b) are attached to the holder stays (44a, 44b) and the holder stay (44a, 44b), the brush holder (43), and the electromagnetic shield are integrated, the holder stay (44a, 44b), the brush holder (43), and the electromagnetic shield are capable of being attached to the gear casing (3).

4. The motor with decelerator according to claim 3, wherein the electromagnetic shields is attached to the gear casing (3) by a fastening unit (10) configured to attach the electric motor (2) and the gear casing (3).

5. A vehicle (501) comprising:
a roof (502);
a roof panel (503) installed on the roof (502); and
a sunroof drive device (500) comprising the motor with decelerator (1) according to any one of claims 1, 3 or 4,
wherein the motor with decelerator (1) is disposed in a state in which the electromagnetic shield is directed toward the roof (502) and the roof panel (503) is driven using the motor with decelerator (1).

## Patentansprüche

1. Motor mit Verzögerer (1) aufweisend:
einen Elektromotor (2) umfassend: ein Paar Bürsten (5), die auf beiden Seiten eines Kommutators (15) angeordnet sind, der in einem Anker (7) installiert ist, zwischen ihnen angeordnet ist und in Gleitkontakt mit dem Kommutator (15) steht, um Strom zu speisen; ein Paar Bürstenhalter (43), die dazu angepasst sind, das Paar Bürsten (5) aufzunehmen und in Bezug auf den Kommutator (15) hin und weg zu bewegen; und Halterstreben (44a, 44b), die zum Unterstützen der Bürstenhalter (43) ausgebildet sind, wobei die Bürstenhalter (43) und die Halterstreben (44a, 44b) durch Harz miteinander integral geformt sind;
ein Getriebegehäuse (3), das integral an dem Elektromotor (2) befestigt ist; und
einen Verzögerungsmechanismus (20), der in dem Getriebegehäuse (3) aufgenommen und mit einer Drehwelle (11) des Elektromotors (2) verbunden ist,
wobei ein aufnehmender konkaver Abschnitt (38), der zum Aufnehmen der Halterstreben (44a, 44b) und des Bürstenhalters (43) konfiguriert ist, an dem Getriebegehäuse (3) gebildet ist,
wobei der aufnehmende konkave Abschnitt (38) dazu ausgebildet ist, die Halterstreben (44a, 44b) und den Bürstenhalter (43) zu befestigen, **dadurch gekennzeichnet, dass**
elektromagnetische Abschirmungen (61a, 61b), die zum Unterdrücken des Einflusses von elektromagnetischem Rauschen ausgebildet sind, an den Außenseiten der Halterstreben (44a, 44b) installiert sind,
die Halterstreben (44a, 44b) entsprechend geteilt sind, um zu den Bürstenhaltern (43) zu korrespondieren, und
die elektromagnetischen Abschirmungen (61a, 61b) entsprechend geteilt sind, um zu den Halterstreben zu korrespondieren.

2. Motor mit Verzögerer nach Anspruch 1,
wobei ein Labyrinthabschnitt (56a, 56b) zwischen einer Umfangskante des aufnehmenden konkaven Abschnitts (38) und einem Bereich der Halterstrebe (44a, 44b), der zur Umfangskante korrespondiert, gebildet ist.

3. Motor mit Verzögerer nach Anspruch 1, wobei in einem Zustand, in dem die elektromagnetischen Abschirmungen (61a, 61b) an den Halterstreben (44a, 44b) befestigt sind und die Halterstreben (44a, 44b), der Bürstenhalter (43) und die elektromagnetische Abschirmung integriert sind, die Halterstreben (44a, 44b), der Bürstenhalter (43) und die elektromagnetische Abschirmung an dem Getriebegehäuse (3) befestigbar sind.

4. Motor mit Verzögerer nach Anspruch 3, wobei die elektromagnetischen Abschirmungen mittels einer Befestigungseinheit (10) an dem Getriebegehäuse (3) befestigt sind, die dazu ausgebildet ist, den Elektromotor (2) und das Getriebegehäuse (3) zu befestigen.

5. Fahrzeug (501), aufweisend:
ein Dach (502);
ein Dachpanel (503) das auf dem Dach (502) installiert ist; und
eine Schiebedachantriebsvorrichtung (500), die den Motor mit Verzögerer (1) nach einem der Ansprüche 1, 3 oder 4 aufweist,
wobei der Motor mit Verzögerer (1) in einem Zustand angeordnet ist, in dem die elektromagnetische Abschirmung auf das Dach (502) gerichtet ist und das Dachpanel (503) mittels des Motors mit Verzögerer (1) angetrieben wird.

## Revendications

1. Moteur ayant un décélérateur (1) comprenant :
un moteur (2) électrique ayant : une paire de balais (5) disposés des deux côtés avec un commutateur (15), qui est monté dans une armature (7), prise en sandwich entre eux et en contact glissant avec le commutateur (15) de manière à alimenter en électricité ; une paire de porte-balais (43) configurés pour loger la paire de balais (5) afin qu'ils s'avancent et se retirent par rapport au commutateur (15) ; et des supports (44a, 44b) de porte-balai configurés pour supporter les porte-balais (43), les porte-balais (43) et les support (44a, 44b) de porte-balai étant formés d'une seule pièce l'un avec l'autre par de la résine ;
un carter (3) d'engrenage relié d'une seule pièce au moteur (2) électrique ; et
un mécanisme (20) de décélération logé dans le carter (3) d'engrenage et connecté à un arbre (11) rotatif du moteur (2) électrique ;
dans lequel une partie (38) concave de logement configurée pour loger les supports (44a, 44b) de porte-balai et les porte-balais (43) est formée au carter (3) d'engrenage,
la partie (38) concave de logement est configurée pour relier le support (44a, 44b) de porte-balai et le porte-balais(43),
**caractérisé en ce que**
des blindages (61a, 61b) électromagnétiques configurés pour supprimer l'influence du bruit électromagnétique sont montés aux extérieurs des supports (44a, 44b) de porte-balai,
les supports (44a, 44b) de porte-balai sont subdivisés pour correspondre aux porte-balais (43), respectivement, et
les blindages (61a, 61b) électromagnétiques sont subdivisés pour correspondre aux supports (44a, 44b) de porte-balai, respectivement.

2. Moteur ayant un décélérateur suivant la revendication 1,
dans lequel une partie (56a, 56b) en labyrinthe est formée entre un bord circonférentiel de la partie (38) concave de logement et une région du support (44a, 44b) de porte-balai correspondant au bord circonférentiel.

3. Moteur ayant un décélérateur suivant la revendication 1, dans lequel, dans un état dans lequel les blindages (61a, 61b) électromagnétiques sont reliés aux supports (44a, 44b) de porte-balai et le support (44a, 44b) de porte-balai, le porte balai (43) et le blindage électromagnétique sont d'une seule pièce, le support (44a, 44b) de porte-balai, le porte-balai (43) et le blindage électromagnétique peuvent être reliés au carter (3) d'engrenage.

4. Moteur ayant un décélérateur suivant la revendication 3, dans lequel le blindage électromagnétique est relié au carter (3) d'engrenage par une unité (10) de fixation configurée pour relier le moteur (2) électrique et le carter (3) d'engrenage.

5. Véhicule (501) comprenant:
un toit (502) ;
un panneau (503) de toit monté sur le toit (502) ; et
un dispositif (500) d'entraînement de toit comprenant le moteur ayant un décélérateur (1) suivant l'une quelconque des revendications 1, 3 ou 4,
dans lequel le moteur ayant un décélérateur (1) est disposé dans un état dans lequel le blindage électromagnétique est dirigé vers le toit (502) et le panneau (503) de toit est entraîné en utilisant le moteur ayant un décélérateur (1).
